# EUROPÄISCHE PATENTSCHRIFT

(11) **EP 3 938 645 B1**
(45) Veröffentlichungstag und Bekanntmachung des Hinweises auf die Patenterteilung: **08.06.2022**
(21) Anmeldenummer: 20708443.5
(22) Anmeldetag: 20.02.2020
(51) Int. Cl.: E02B 9/02, F03B 3/00, F03B 3/16, F03B 11/00

(54) **WASSERKRAFTANLAGE MIT EINEM RINGGATTER**
HYDROPOWER PLANT WITH A RING GATE
CENTRALE HYDROÉLECTRIQUE DOTÉE D'UNE VANNE-FOURREAU

(30) Priorität: 12.03.2019 DE 102019106229
(43) Veröffentlichungstag der Anmeldung: 19.01.2022
(73) Patentinhaber: Voith Patent GmbH, 89522 Heidenheim (DE)
(72) Erfinder: SCHABASSER, Martin, 3123 Pfaffing (AT); VORWALD, Stefan, 3074 Michelbach (AT)
(74) Vertreter: Voith Patent GmbH - Patentabteilung
(86) Internationale Anmeldenummer: PCT/EP2020/054436
(87) Internationale Veröffentlichungsnummer: WO 2020/182437

(56) Entgegenhaltungen:
- DE-A1-102016 205 647
- US-A- 295 590
- US-A- 309 227
- US-A- 480 929

## Beschreibung

Die vorliegende Erfindung betrifft eine Wasserkraftanlage mit einem Laufrad und einem Ringgatter bzw. einem Ring-gate. Das erfindungsgemäße Ringgatter kommt insbesondere bei Wasserkraftanlagen mit einem Laufrad vom Typ Francis oder Kaplan und bei Pumpspeicherkraftwerken mit einem reversiblen Pumpturbinenlaufrad zur Anwendung.

Ringgatter sind Verschlussorgane, welche zwischen einer Geöffnet-Position und einer Geschlossen-Position bewegt werden können. Hydraulische Maschinen mit einem solchen Ringgatter sind aus dem Stand der Technik bekannt. Beispielhaft sei auf die US 3,489,391 verwiesen.

Bei den bekannten Wasserkraftanlagen mit einem Ringgatter ergibt sich das Problem, dass das Ringgatter nicht vollkommen geschlossen werden kann, wenn sich im Strömungskanal auf der Höhe des Ringgatters ein Fremdkörper befindet. In diesem Fall bleibt ein großer Restquerschnitt des Strömungskanals offen, was ein Stillsetzen der Maschine verhindert.

Die Erfinder haben sich die Aufgabe gestellt, eine Wasserkraftanlage mit Ringgatter anzugeben, das das genannte Problem soweit verringert, dass ein Stillsetzen der Wasserkraftanlage ermöglicht wird, auch wenn sich im Strömungskanal auf der Höhe des Ringgatters ein Fremdkörper befindet.

Diese Aufgabe wird durch die Merkmale des unabhängigen Anspruchs gelöst. Weitere vorteilhafte Ausführungsformen ergeben sich aus den davon abhängigen Unteransprüchen.

Die Erfinder haben erkannt, dass das genannte Problem durch die Ausgestaltung des Ringgatters mit wenigstens zwei Stufen gelöst werden kann. Ringgatter mit zwei Stufen sind aus dem Stand der Technik bekannt. So offenbart die DE 10 2016 205 647 A1 ein zweistufiges Ringgatter, wobei einer der Stufen Öffnungen ausweist. Dadurch können Vibrationen beim Schließen des Ringgatters reduziert werden.

Die erfindungsgemäße Lösung wird nachfolgend anhand von Figuren erläutert. Darin ist im Einzelnen folgendes dargestellt:
- Figur 1: Wasserkraftanlage;
- Figur 2: Schnitt durch ein erfindungsgemäßes Ringgatter;
- Figur 3: Schnitt durch ein erfindungsgemäßes Ringgatter in Geschlossen-Position;
- Figur 4: Schnitt durch ein erfindungsgemäßes Ringgatter in Geschlossen-Position gemäß einer weiteren Ausführungsform;
- Figur 5: Schnitt durch ein erfindungsgemäßes Ringgatter mit einem Fremdkörper;
- Figur 6: Detail eines erfindungsgemäßen Ringgatters in Seitenansicht;
- Figur 7: Schnitt durch ein erfindungsgemäßes Ringgatter gemäß einer weiteren Ausführungsform;
- Figur 8: Schnitt durch ein erfindungsgemäßes Ringgatter gemäß der Ausführungsform aus Figur 7.

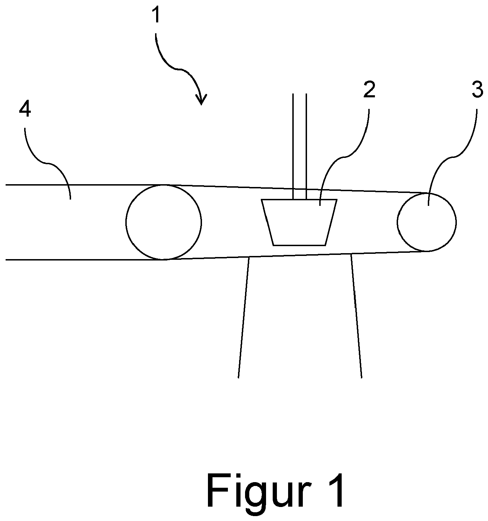

Figur 1 zeigt eine Wasserkraftanlage in stark schematisierter Darstellung. Die Wasserkraftanlage ist mit 1 bezeichnet. Die Wasserkraftanlage 1 umfasst ein Laufrad, welches mit 2 bezeichnet ist, eine Spiralgehäuse, welches mit 3 bezeichnet ist und einen Wasserweg, welcher mit 4 bezeichnet ist. Dabei ist das Laufrad 2 im Wasserweg 4 angeordnet.

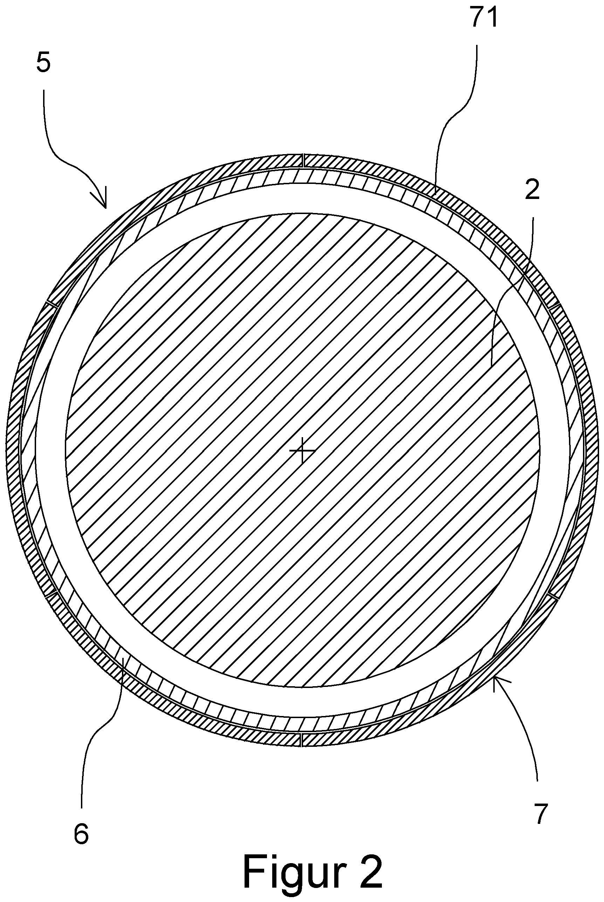

Figur 2 zeigt einen Schnitt durch ein erfindungsgemäßes Ringgatter. Figur 2 zeigt das Laufrad der Wasserkraftanlage 1, welches wiederum mit 2 bezeichnet ist. Das kleine zentrale Kreuz deutet dabei die Achse des Laufrades 2 an, d.h. der Schnitt von Figur 2 verläuft senkrecht zur Laufradachse. Figur 2 zeigt ferner ein Ringgatter, welches mit 5 bezeichnet ist. Das Ringgatter 5 umfasst einen ersten hohlen die Laufradachse umschlingenden Körper, welcher mit 6 bezeichnet ist, und einen zweiten hohlen die Laufradachse umschlingenden Körper, welcher mit 7 bezeichnet ist. Der zweite Körper 7 besteht aus mehreren Segmenten, von denen eines mit 71 bezeichnet ist. In Figur 2 besteht der zweite Körper 7 aus sechs Segmenten 71, wobei die Anzahl der Segmente 71 im Allgemeinen eine beliebige Zahl größer 1 sein kann. Die beiden Körper 6 und 7 sind konzentrisch angeordnet, wobei in Figur 2 der erste Körper 6 innerhalb des zweiten Körpers 7 angeordnet ist. Es ist jedoch auch die umgekehrte Anordnung möglich, d.h. dass der zweite Körper 7 innerhalb des ersten Körpers 6 angeordnet ist.

Dabei ist das Ringgatter 5 so ausgeführt, dass es von einer Geöffnet- in eine Geschlossen-Position und zurück in axialer Richtung bewegt werden kann, wobei kein Wasserfluss durch den Wasserweg 4 erfolgen kann, wenn sich das Ringgatter 5 in der Geschlossen-Position befindet. Dabei bezieht sich der Begriff "axiale Richtung" auf die Laufradachse. Das Ringgatter 5 ist ferner so ausgeführt, dass es außerhalb des Wasserweges 4 angeordnet ist, wenn es sich in der Geöffnet-Position befindet.

Die Segmente 71 des zweiten Körpers 7 sind mit dem ersten Körper 6 so verbunden, dass jedes Segment 71 in axialer Richtung relativ zum ersten Körper 6 unabhängig von den anderen Segmenten 71 verschoben werden kann. In Figur 2 sind die Mittel, die die Verbindung zwischen den Segmenten 71 und dem ersten Körper 6 bewerkstelligen, nicht dargestellt.

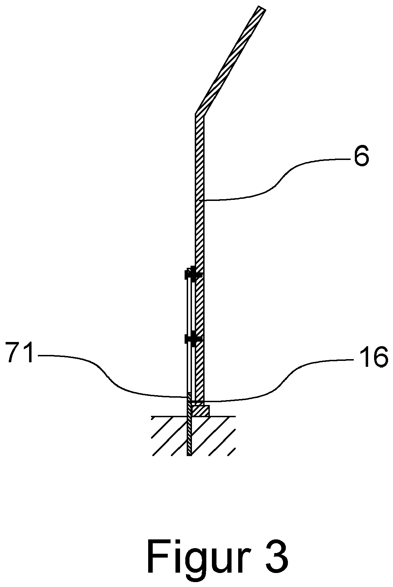

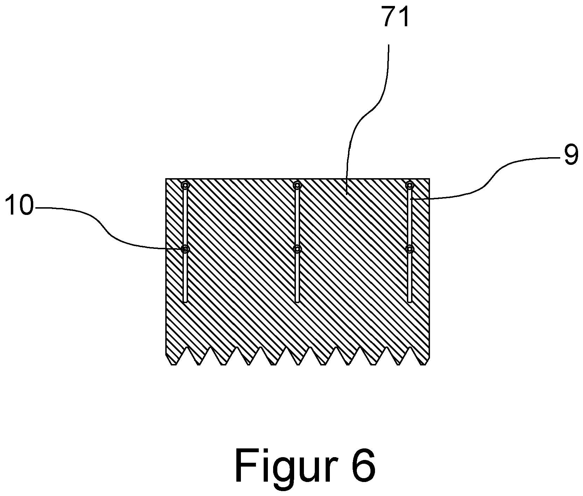

Figur 3 zeigt ein erfindungsgemäßes Ringgatter in einem Schnitt entlang der Drehachse des Laufrades. Das Ringgatter 5 befindet sich in der Geschlossen-Position. Die Bezeichnungen entsprechen den Bezeichnungen von Figur 2. In der gezeigten Ausführungsform sind die Segmente 71 mit dem ersten Körper 6 mittels Bolzen verbunden. Dabei umfasst jedes Segment 71 axial ausgerichtete Langlöcher in welchen die Bolzen geführt werden, wobei die Bolzen in den ersten Körper 6 einschraubt sind (vgl. auch Figur 6). Dabei kann jedes Segment 71 eine erste Position einnehmen, bei der jeweils ein Ende des betreffenden Segments 71 in axialer Richtung über das Ende des ersten Körpers 6 hinaus ragt, welches dafür vorgesehen ist beim Schließen des Ringgatters 5 zuerst in den Wasserweg 4 eingeführt zu werden. In Figur 3 befindet sich das dargestellte Segment 71 in dieser ersten Position.

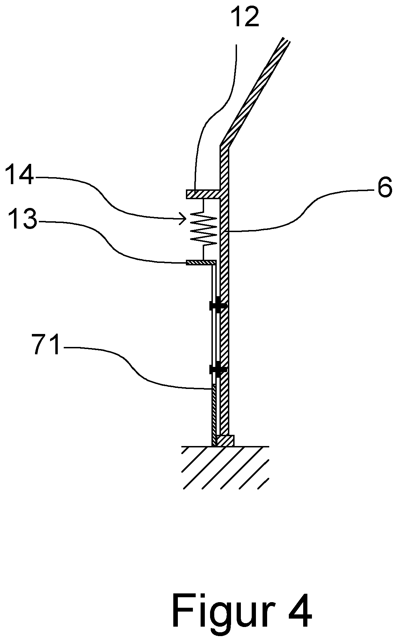

Figur 4 zeigt ein erfindungsgemäßes Ringgatter in einer weiteren Ausführungsform in der Geschlossen-Position. Jedes Segment 71 kann eine zweite Position einnehmen, bei der jeweils ein Ende des betreffenden Segments 71 in axialer Richtung mit dem Ende des ersten Körpers 6 bündig abschließt, welches dafür vorgesehen ist beim Schließen des Ringgatters 5 zuerst in den Wasserweg 4 eingeführt zu werden. In Figur 4 befindet sich das dargestellte Segment 71 in dieser zweiten Position.

In der ersten Position der Segmente 71 gibt es also in axialer Richtung einen Überstand derselben über den ersten Körper 6 hinaus, während es diesen Überstand in der zweiten Position der Segmente 71 nicht gibt. Es ist zu erwähnen, dass der Vorteil der vorliegenden Erfindung wenigstens teilweise auch dann erzielt werden kann, wenn der Überstand in der zweiten Position der Segmente 71 nicht vollständig verschwindet. D.h. auch dann ergibt sich ein Vorteil im Vergleich zu einem herkömmlichen Ringgatter, wenn die Enden der Segmente 71 in der zweiten Position noch etwas über das Ende des ersten Körpers hinausragen und der Überstand daher nur reduziert ist gegenüber der ersten Position der Segmente 71.

Ein erfindungsgemäßes Ringgatter 5 verfügt ferner über Mittel zum Halten der Segmente 71 in ihrer ersten Position, welche so ausgeführt sind, dass jedes Segment 71 in axialer Richtung aus seiner ersten Position herausbewegt werden kann, wenn eine axial gerichtete auf das jeweilige Segment 71 einwirkende Kraft auftritt, welche eine vordefinierte Schwelle überschreitet.

Die einfachste Möglichkeit zur Ausführung der genannten Mittel zum Halten der Segmente 71 in ihrer ersten Position besteht in der Ausnutzung von Reibungskräften. So können beispielsweise die in Figur 3 und 6 dargestellten Bolzen mit einem definierten Drehmoment angezogen werden, um so die Haftreibungskräfte zwischen den Segmenten 71 und dem die Bolzen umschlingenden Ringscheiben (oder andere geeignete Mittel) auf ein vordefiniertes Maß einzustellen. Es ist klar, dass diese Ausführungsform der Haltemittel eine gewisse Irreversibilität impliziert, d.h. wenn ein Segment 71 gegen die eingestellten Haftreibungskräfte aus seiner ersten Position herausbewegt worden ist, dann kann das betreffende Segment 71 nicht ohne weiteres wieder in seine erste Position gebracht werden.

Figur 4 zeigt eine andere alternative Ausführungsform für die Halterung der Segmente 71 in ihrer ersten Position. Dabei kommen elastische Elemente, wie z.B. Federelemente zum Einsatz. In Figur 4 ist ein solches Federelement mit 14 bezeichnet. Das Federelement 14 ist dabei zwischen einem ersten Vorsprung, welcher mit einem Segment 71 verbunden und mit 13 bezeichnet ist, und einem zweiten Vorsprung angeordnet, welcher mit dem ersten Körper 6 verbunden und mit 14 bezeichnet ist. Es ist klar, dass über die Vorspannung des Federelementes 14 die genannte Kraft-Schwelle eingestellt werden kann. Diese Ausführungsform der Haltemittel wirkt offensichtlich reversibel, so dass sich beim Öffnen des in Figur 4 dargestellten Ringgatters 5 die Segmente 71 automatisch in ihre erste Position zurückbewegen. Es ist klar, dass hierzu die wirkenden Reibungskräfte kleiner sein müssen als die wirkenden Federkräfte.

Ein weiteres alternatives irreversibles Haltemittel besteht in der Verwendung von Bruchelementen, wie z.B. von Scherbolzen. In Figur 3 ist ein solches Bruchelement dargestellt und mit 16 bezeichnet. Es besteht in einem Bolzen 16, welcher sich zwischen einem Segment 71 und dem erste Körper 6 erstreckt und das Segment 71 so mit dem Körper 6 verbindet, dass das Segment 71 nur dann aus seiner ersten Position herausbewegt werden kann, wenn der Bolzen 16 deformiert und schließlich abgeschert wird. Es ist klar, dass dazu entsprechende Öffnungen in den Segmenten 71 und im ersten Körper 6 vorzusehen sind. Bei dem in Figur 3 dargestellten Bolzen 16 handelt es sich genaugenommen um eine Kombination von Federelement und Bruchelement, da bei einer Relativbewegung von Segment 71 und erstem Körper 6 der Bolzen 16 zunächst verbogen und erst bei einer weiteren Bewegung des Segments 71 entweder bricht oder aus einem der Öffnungen, in denen er angeordnet war, herausgerissen wird.

Dabei ist es auch denkbar, dass alle genannten Arten von Haltemitteln in Kombination zur Anwendung kommen.

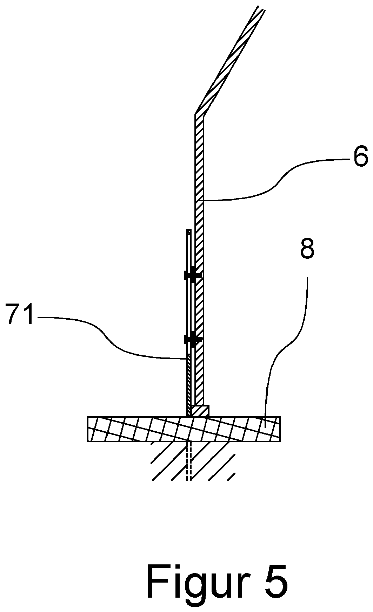

Bei manchen Ausführungsformen eines erfindungsgemäßen Ringgatters 5 schließt in der Geschlossen-Position des Ringgatters 5 dasjenige Ende des ersten Körpers 6, welches dafür vorgesehen ist beim Schließen des Ringgatters 5 zuerst in den Wasserweg 4 eingeführt zu werden, mit dem Rand des Wasserweges 4 ab, so dass der Wasserfluss unterbunden wird. Da die Segmente 71 in ihrer ersten Position über dieses Ende des ersten Körpers 6 hinausragen, kann am Rand des Wasserweges 4 ein Raum vorgesehen sein, um den Überstand der Segmente 71 in der Geschlossen-Position des Ringgatters 5 aufzunehmen (vgl. die Figuren 3 und 5). Dies ist insbesondere bei der Verwendung von Bruchelementen als Haltemittel zwingend, da sonst bei jedem normalen Schließvorgang des Ringgatters 5 alle Segmente 71 aus ihrer ersten Position herausbewegt werden würden, und ein Wartungseingriff zur Instandsetzung des Ringgatters notwendig wäre. Das ist natürlich nicht erwünscht. Bei der Verwendung von reversiblen Haltemitteln ist ein solcher Raum am Rande des Wasserweges 4 nicht notwendig (vgl. Figur 4).

Die oben erwähnte vordefinierte Kraft-Schwelle sollte auf jeden Fall bei der Verwendung von irreversiblen Haltemitteln wenigstens so hoch gewählt werden, dass beim normalen Schließvorgang des Ringgatters 5 keine Verschiebung der Segmente 71 aus ihrer ersten Position heraus erfolgen kann. Da die Segmente 71 über das entsprechende Ende des ersten Körpers 6 hinausragen, werden dieselben beim Schließen des Ringgatters 5 zuerst in den Wasserweg 4 eingefahren und erfahren dabei den Gegendruck des Wassers. Dabei darf es zu keiner Verschiebung der Segmente 71 relativ zum ersten Körper 6 kommen können. Bei der Verwendung von reversiblen Haltemitteln ist die genannte Bedingung nicht so zwingend, es schadet jedoch auch nichts, wenn auch in diesem Fall die Schwelle wie genannt eingestellt wird.

Figur 5 zeigt ein erfindungsgemäßes Ringgatter 5 in der Situation, dass sich während dem Schließvorgang des Ringgatters 5 ein Fremdkörper im Wasserweg 4 auf der Höhe des Ringgatters 5 befindet. Der Fremdkörper ist dabei mit 8 bezeichnet. Der Fremdkörper 8 verhindert dass das Ringgatter 5 seine normale Geschlossen-Position einnehmen kann, da er zwischen dem Ende des ersten Körpers 6 und dem Rand des Wasserweges 4 eingeklemmt wird. Es ist klar, dass beim Schließen des Ringgatters 5 die Segmente 71, die sich im Bereich des Fremdkörpers 8 befinden und welches sich dabei in ihrer ersten Position befinden, bereits zuvor in Kontakt mit dem Fremdkörper 8 kommen und beim weiteren Absenken des Ringgatters 5 relativ zum ersten Körper 6 in axialer Richtung nach oben verschoben werden. Die dafür benötigte Kraft wird von den Aktuatoren des Ringgatters 5 aufgebracht. Die Anzahl der so verschobenen Segmente 71 hängt natürlich von der Größe des Fremdkörpers 8 und der radialen Ausdehnung der Segmente 71 ab. In der Regel sind es jedoch nicht mehr als 2 oder 3. Die restlichen Segmente 71 bleiben in jedoch in ihrer ersten Position, so dass der jeweilige Überstand dieser Segmente 71 den Wasserfluss in ihrem Bereich unterbinden können. Es verbleibt somit nur eine Lücke im Bereich der verschobenen Segmente 71. Da sich in dieser Lücke auch der Fremdkörper 8 befindet, welcher seinerseits den Wasserfluss behindert, kann das erfindungsgemäße Ringgatter 5 den Wasserfluss auf ein erträgliches Maß reduzieren, so dass die Wasserkraftanlage 1 stillgesetzt werden kann.

Figur 6 zeigt ein Detail eines erfindungsgemäßen Ringgatters 5 in Seitenansicht. Dabei handelt es sich um ein Segment 71. Das Segment 71 umfasst drei axial ausgerichtete Langlöcher, von denen eines mit 9 bezeichnet ist. Einer der in den Langlöchern geführten Bolzen ist dabei mit 10 bezeichnet. Das in Figur 5 gezeigte Segment 71 zeigt ferner eine optionale Verzahnung im Bereich des Überstandes gegenüber dem (nicht dargestellten) ersten Körper 6. Diese Verzahnung bewirkt ein optimiertes Schließverhalten des Ringgatters 5 analog zu der in der DE 10 2016 205 647 A1 beschriebenen Wirkung. Eine solche Verzahnung beeinträchtigt nicht die Dichtigkeit des Ringgatters 5 in der normalen Geschlossen-Position (vgl. die Figur 3 und 4). Wenn sich jedoch wie in Figur 5 dargestellt ein Fremdkörper 8 im Wasserweg 4 befindet, kann die optionale Verzahnung zu einem höheren Leckage-Wasserfluss führen, im Vergleich mit einem erfindungsgemäßen Ringgatter ohne eine solche Verzahnung.

Die in Figur 6 gezeigte Ausführungsform mit Langlöchern ist besonders einfach und somit kostensparend herstellbar. Alternative Ausführungsformen umfassen beispielsweise axial verlaufende Nuten im ersten Körper 6, in welche entsprechend geformte Vorsprünge der Segmente 71 eingreifen und geführt werden, z.B. in der Form von Schwalbenschwänzen oder Hammerköpfen.

Wie bereits erwähnt bedürfen einige der beschriebenen Ausführungsformen eines Wartungseingriffes, wenn die in Figur 5 dargestellte Situation eingetreten ist, d.h. wenn ein oder mehrere Segmente 71 aus ihrer ersten Position herausbewegt wurden. Das betrifft auf jeden Fall die Ausführungsformen mit Bruchelementen. Auch bei der Verwendung von Reibungskräften kann ein solcher Wartungseingriff notwendig sein, um die verschobenen Segmente 71 wieder in ihre erste Position zu bringen. Bei den Ausführungsformen die Reibungskräfte verwenden, kann diese Notwendigkeit jedoch dadurch umgangen werden, dass an geeigneter Stelle ein Vorsprung vorgesehen wird, so dass beim Fahren des Ringgatters 5 in die Geöffnet-Position dieser Vorsprung so in die Segmente 71 eingreift, dass die verschobenen Segmente 71 beim nach oben Fahren des ersten Körpers 6 wieder in ihre erste Position geschoben werden. Die hierfür benötigte Kraft wird durch die Aktuatoren des Ringgatters 5 aufgebracht. Ein solcher Vorsprung ist außerhalb des Wasserweges 4 auf der Seite vorzusehen, an der sich das Ringgatter in der Geöffnet-Position befindet (d.h. also beispielsweise oben in Figur 3). Es sei jedoch erwähnt, dass ein Wartungseingriff zur Wiederherstellung der Funktionalität des Ringgatters 5 nach einem Vorfall wie in Figur 5 gezeigt in der Regel kein großes Problem darstellt, da zur Entfernung eines Fremdkörpers ohnehin ein Wartungseingriff notwendig ist.

Bei Wasserkraftanlagen mit Traversen bzw. Leitschaufeln befinden sich diese oft in der Nähe des Ringgatters. Durch die Traversen bzw. Leitschaufeln wird dabei der Wasserfluss so aufgeteilt, dass sich (im Turbinenbetrieb) ein Fremdkörper zwangsläufig durch genau einen der Zwischenräume zwischen den Traversen bzw. Leitschaufeln bewegen muss, um in den Bereich des Ringgatters zu kommen. Wenn man daher den zweiten Körper 7 mit genau so vielen Segmenten 71 ausführt, wie es Zwischenräume zwischen den Traversen bzw. Leitschaufeln gibt, und die Segmente 71 so anordnet, dass je ein Segment 71 im Bereich je eines Zwischenraumes zu liegen kommt, dann kann man erreichen, dass ein einzelner Fremdkörper beim Schließen des Ringgatters nur eines der Segmente 71 aus seiner ersten Position herausbewegen kann. Dadurch ergibt sich offensichtlich ein besonders gutes Schließverhalten des Ringgatters, wenn ein Fremdkörper den normalen Schließvorgang behindert.

Ein Nachteil der bis hierher beschriebenen Ausführungsformen des erfindungsgemäßen Ringgatters besteht darin, dass im Vergleich mit einem konventionellen Ringgatter ein um die axiale Länge des Überstandes der Segmente erhöhter axialer Bewegungshub des Ringgatters benötigt wird. Die im Folgenden beschriebenen Ausführungsformen des erfindungsgemäßen Ringgatters weisen diesen Nachteil nicht auf.

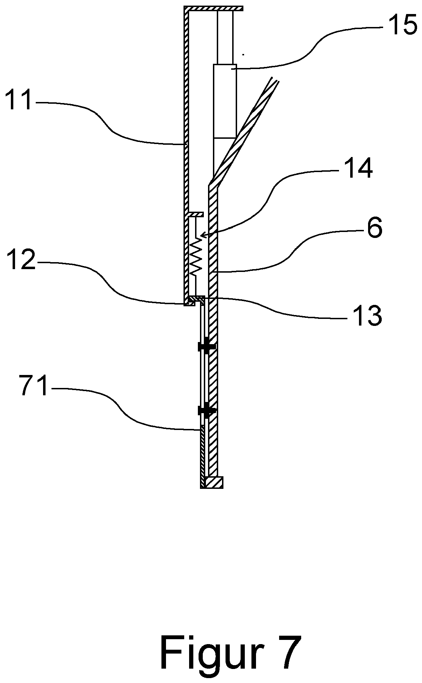

Figur 7 zeigt einen Schnitt durch ein erfindungsgemäßes Ringgatter 5 in einer weiteren Ausführungsform. Zusätzlich zum ersten und zweiten hohlen die Laufradachse umschlingenden Körper umfasst das Ringgatter 5 einen weiteren hohlen die Laufradachse umschlingenden Körper, welcher mit 11 bezeichnet und konzentrische zu den beiden anderen Körpern angeordnet ist. Zwischen dem ersten Körper 6 und dem dritten Körper 11 ist wenigstens ein Aktuator so angeordnet, dass er den dritten Körper 11 relativ zum ersten Körper 6 in axialer Richtung bewegen kann. Ein solcher Aktuator ist in Figur 7 mit 15 bezeichnet. Neben dem bzw. den Aktuatoren 15 können weitere Führungsmittel vorgesehen sein, die eine axiale Relativbewegung des ersten und dritten Körpers zueinander ohne Verkannten ermöglichen. Jedes Segment 71 umfasst einen Vorsprung, welcher mit 13 bezeichnet ist. Der dritte Körper 11 umfasst einen Vorsprung, welcher mit 12 bezeichnet ist. Dabei sind die Vorsprünge 12 und 13 so ausgeführt, dass dieselben ineinandergreifen können, um bei einem Ausfahren des Aktuators 15 die Segmente 71 in ihre zweite Position zu bringen, d.h. in der die Segmente 71 in axialer Richtung nicht über das Ende des ersten Körpers 6 hinaus ragen, welches dafür vorgesehen ist beim Schließen des Ringgatters 5 zuerst in den Wasserweg 4 eingeführt zu werden. In Figur 7 ist der Aktuator 15 so weit ausgefahren, dass sich die Segmente 71 in ihrer zweiten Position befinden. Das Ringgatter 5 umfasst für jedes Segment 71 ein Federelement, von denen eines mit 14 bezeichnet ist. Jedes Federelement 14 ist dabei zwischen einen Segment 71 und dem dritten Körper 11 so angeordnet, dass die Vorsprünge 12 und 13 durch die Federkraft aneinander gepresst werden.

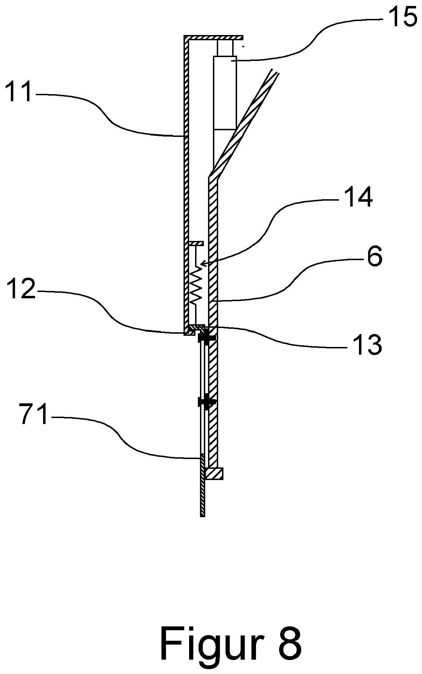

Figur 8 zeigt das erfindungsgemäße Ringgatter gemäß Figur 7 mit denselben Bezeichnungen. Dabei ist der Aktuator 15 eingefahren. Durch die Gewichtskraft, welche auf die Segmente 71 wirkt, und die Kräfte der Federelemente 14 werden die Segmente 71 bei dieser Stellung des Aktuators 15 in ihrer ersten Position gehalten. D.h. die Mittel zum Halten der Segmente 71 in ihrer ersten Position umfassen in dieser Ausführungsform neben den Federelementen 14 auch den dritten Körper 11, die Aktuatoren 15 und die Vorsprünge 13, da durch das Zusammenwirken dieser Elemente die Segmente 71 in ihrer ersten Position gehalten werden. Dabei wird die Kraft-Schwelle durch die Gewichtskraft der Elemente 71, eventuell vorliegender Haftreibungskräfte und der Vorspannung der Federelemente 14 bestimmt. Es sei erwähnt, dass die Kraft-Schwelle durch ein analoges Zusammenwirken von mehreren Wirkkomponenten auch bei den anderen Ausführungen zustande kommen kann. Auch bei der Ausführungsform gemäß Figur 7 und 8 können alle weiter oben genannten Arten von Halteelemente eingesetzt werden. Beispielsweise könnte bezugnehmend auf Figur 7 für jedes Segment 71 ein Scherbolzen direkt oberhalb des Vorsprungs 13 im dritten Körper 11 so angeordnet sein, dass er mit seinem aus dem Körper 11 herausstehenden Ende das Segment 71 nach unten drücken kann, wenn der Aktuator 15 eingefahren wird. Reibungskräfte könnten zum Einsatz kommen, wenn der dritte Körper axial verlaufende Langlöcher aufweist, in welchen Bolzen geführt werden, welche in den Vorsprung 13 eingeschraubt sind. Der Fachmann findet instruiert aus dem Gesagten ohne Probleme weitere Ausführungsformen ohne dabei erfinderisch tätig zu werden.

Ausgehend von der Geschlossen-Position ergibt sich folgender Ablauf beim Öffnen eines erfindungsgemäßen Ringgatters gemäß der Ausführungsform von Figur 7 und 8: Bewegen des Ringgatters in axialer Richtung bis sich der erste Körper gerade nicht mehr im Wasserweg befindet (S1). Ausfahren der Aktuatoren 15 bis die Segmente 71 keinen Überstand mehr aufweisen (in ihrer zweiten Position), wodurch sie sich ebenfalls nicht mehr im Wasserweg befinden (S2). Im Prinzip können die Schritte S1 und S2 in beliebiger Reihenfolge ausgeführt werden - auch simultan. Beim Schließen des Ringgatters werden die Schritte S1 und S2 invertiert. Für die Reihenfolge gilt dasselbe wie beim Öffnen, wobei es von Vorteil sein kann, wenn zunächst der invertierte Schritt S2 (d.h. Einfahren der Aktuatoren 15 bis sich die Segmente 71 in ihrer ersten Position befinden) ausgeführt wird und danach erst der invertierte Schritt S1 (d.h. Bewegen des Ringgatters in die Geschlossen-Position).

Aus dem Gesagten wird klar, dass für ein erfindungsgemäßes Ringgatter gemäß der Ausführungsform von Figur 7 und 8 kein höherer axialer Hub benötigt wird, als bei einem herkömmlichen Ringgatter.

Eine weitere Ausführungsform, welche ebenfalls keinen höheren axialen Hub benötigt, besteht darin die Segmente 71 des zweiten Körper 7 an den Stoßstellen mit einer aushärtbaren Dichtflüssigkeit miteinander zu verkleben, so dass das Ringgatter 5 schon den Wasserfluss unterbricht, wenn der zweite Körper mit dem Rand der Wasserweges 4 abschließt. Zusätzlich kann auch noch der zweite Körper 7 mit dem ersten Körper 6 verklebt werden. Dabei stellt die ausgehärtete Dichtflüssigkeit ein Bruchelement dar.

## Patentansprüche

1. Wasserkraftanlage (1) mit einem in einem Wasserweg (4) angeordneten Laufrad (2), einer Spirale (3) und einem Ringgatter (5) zum Unterbrechen des Wasserflusses durch den Wasserweg (4), wobei das Ringgatter (5) so ausgeführt ist, dass es von einer Geöffnet- in eine Geschlossen-Position und zurück in axialer Richtung bewegt werden kann, wobei kein Wasserfluss durch den Wasserweg (4) erfolgen kann, wenn sich das Ringgatter (5) in der Geschlossen-Position befindet, und wobei das Ringgatter einen ersten (6) und einen zweiten (7) hohlen die Laufradachse umschlingenden Körper umfasst, wobei die beiden Körper (6, 7) konzentrisch zueinander angeordnet sind, **dadurch gekennzeichnet, dass** der zweite Körper (7) aus mehreren Segmenten (71) besteht, und wobei die Segmente (71) so mit dem ersten Körper (6) verbunden sind, dass jedes Segment (71) in axialer Richtung relativ zum ersten Körper (6) unabhängig von den anderen Segmenten (71) verschoben werden kann, und wobei jedes Segment (71) eine erste Position einnehmen kann, bei der jeweils ein Ende des betreffenden Segments (71) in axialer Richtung über das Ende des ersten Körpers (6) hinaus ragt, welches dafür vorgesehen ist beim Schließen des Ringgatters (5) zuerst in den Wasserweg (4) eingeführt zu werden, so dass sich ein Überstand der Segmente (71) ergibt, und wobei jedes Segment (71) eine zweite Position einnehmen kann, bei der der Überstand reduziert ist, und wobei das Ringgatter (5) Mittel (10, 11, 12, 13, 14, 15, 16) zum Halten der Segmente (71) in ihrer ersten Position umfasst, welche so ausgeführt sind, dass jedes Segment (71) in axialer Richtung aus seiner ersten Position herausbewegt werden kann, wenn eine axial gerichtete auf das Segment (71) einwirkende Kraft auftritt, welche eine vordefinierte Schwelle überschreitet.

2. Wasserkraftanlage (1) nach Anspruch 1, wobei in der zweiten Position der Segmente (71) diese keinen Überstand aufweisen, sondern bündig mit dem Ende des ersten Körpers abschließen, welches dafür vorgesehen ist beim Schließen des Ringgatters (5) zuerst in den Wasserweg (4) eingeführt zu werden.

3. Wasserkraftanlage (1) nach Anspruch 1 oder 2, wobei jedes Segment (71) axial ausgerichtete Langlöcher (9) umfasst, und das Ringgatter (5) Bolzen (10) umfasst, welche in den Langlöchern (9) geführt werden und welche in den ersten Körper (6) eingeschraubt sind.

4. Wasserkraftanlage (1) nach einen der Ansprüche 1 bis 3, wobei die Mittel zum Halten der Segmente (71) in ihrer ersten Position Elemente (10) umfassen, welche Haftreibungskräfte zum Halten der Segmente (71) zur Verfügung stellen.

5. Wasserkraftanlage (1) nach einen der Ansprüche 1 bis 4, wobei die Mittel zum Halten der Segmente (71) in ihrer ersten Position elastische Elemente (14, 16) umfassen.

6. Wasserkraftanlage (1) nach einen der Ansprüche 1 bis 5, wobei die Mittel zum Halten der Segmente (71) in ihrer ersten Position Bruchelemente (16) umfassen.

7. Wasserkraftanlage (1) nach einen der Ansprüche 1 bis 6, wobei das Ringgatter (5) einen dritten hohlen die Laufradachse umschlingenden Körper (11) umfasst, welcher konzentrisch zum ersten (6) und zweiten (7) Körper angeordnet ist, und das Ringgatter (5) ferner wenigstens einen Aktuator (15) umfasst, welcher zwischen dem ersten (6) und dritten (11) Körper so angeordnet ist, dass er den dritten Körper (11) relativ zum ersten Körper (6) in axialer Richtung bewegen kann, und wobei jedes Segment einen Vorsprung (13) umfasst, und der dritte Körper (11) einen Vorsprung umfasst, wobei die Vorsprünge (12, 13) so ausgeführt sind, dass dieselben ineinandergreifen können, um bei einem Ausfahren des Aktuators (15) die Segmente (71) in ihre zweite Position zu bringen, wobei der Überstand verschwindet.

## Claims

1. A hydroelectric power plant (1) comprising an impeller (2) arranged in a waterway (4), a volute (3) and a ring gate (5) for interrupting the flow of water through the waterway (4), wherein the ring gate (5) is adapted to be moved from an open to a closed position and back in axial direction, wherein no water flow can occur through the waterway (4) when the ring gate (5) is in the closed position, and wherein the ring gate comprises a first (6) and a second (7) hollow body surrounding the impeller axis, the two bodies (6, 7) being arranged concentrically to each other, **characterized in that** the second body (7) consists of a plurality of segments (71), and wherein the segments (71) are connected to the first body (6) in such a way that each segment (71) can be displaced in axial direction relative to the first body (6) independently of the other segments (71) and wherein each segment (71) can assume a first position in which one end of the respective segment (71) projects in the axial direction beyond the end of the first body (6) which is intended to be inserted first into the waterway (4) when the ring gate (5) is closed, so that there is an overhang of the segments (71), and wherein each segment (71) can assume a second position in which the overhang is reduced, and wherein the annular gate (5) comprises means (10, 11, 12, 13, 14, 15, 16) for holding the segments (71) in their first position, which are designed such that each segment (71) can be moved axially out of its first position when an axially directed force acting on the segment (71) occurs which exceeds a predefined threshold.

2. A hydroelectric power plant (1) according to claim 1, wherein in the second position of the segments (71) they do not have an overhang, but are flush with the end of the first body, which is intended to be inserted first into the waterway (4) when closing the ring gate (5).

3. Hydroelectric power plant (1) according to claim 1 or 2, wherein each segment (71) comprises axially aligned elongated holes (9), and the ring gate (5) comprises bolts (10) which are guided in the elongated holes (9) and which are screwed into the first body (6).

4. A hydroelectric power plant (1) according to any one of claims 1 to 3, wherein the means for holding the segments (71) in their first position comprises elements (10) providing static friction forces for holding the segments (71).

5. Hydroelectric power plant (1) according to any one of claims 1 to 4, wherein the means for holding the segments (71) in their first position comprise elastic elements (14, 16).

6. Hydroelectric power plant (1) according to any one of claims 1 to 5, wherein the means for holding the segments (71) in their first position comprise fracture elements (16).

7. A hydroelectric power plant (1) according to any one of claims 1 to 6, wherein the ring gate (5) comprises a third hollow impeller axis wrapping body (11) arranged concentrically to the first (6) and second (7) bodies, and the ring gate (5) further comprises at least one actuator (15) arranged between the first (6) and third (11) bodies such so as to be able to move the third body (11) relative to the first body (6) in the axial direction, and wherein each segment comprises a projection (13), and the third body (11) comprises a projection, the projections (12, 13) being adapted to engage with each other so as to bring the segments (71) into their second position upon extension of the actuator (15), the projection disappearing.

## Revendications

1. Aménagement hydroélectrique (1) comprenant une roue (2) disposée dans une voie d'eau (4), une volute (3) et une porte annulaire (5) pour interrompre l'écoulement d'eau à travers la voie d'eau (4), la porte annulaire (5) étant conçue pour être déplacée dans la direction axiale d'une position ouverte à une position fermée et inversement, aucun écoulement d'eau ne pouvant se produire à travers la voie d'eau (4) lorsque la porte annulaire (5) est dans la position fermée, et dans lequel la grille annulaire comprend un premier (6) et un deuxième (7) corps creux entourant l'axe de la roue, les deux corps (6, 7) étant concentriques l'un par rapport à l'autre, **caractérisé en ce que** le deuxième corps (7) est constitué de plusieurs segments (71), et dans lequel les segments (71) sont reliés au premier corps (6) de telle sorte que chaque segment (71) peut être déplacé dans la direction axiale par rapport au premier corps (6) indépendamment des autres segments (71), et chaque segment (71) pouvant prendre une première position dans laquelle une extrémité de chaque segment (71) concerné dépasse en direction axiale de l'extrémité du premier corps (6) qui est prévue pour être introduite en premier dans le passage d'eau (4) lors de la fermeture de la grille annulaire (5), de sorte qu'il en résulte un dépassement des segments (71), et chaque segment (71) pouvant prendre une deuxième position, dans laquelle le dépassement est réduit, et dans lequel la grille annulaire (5) comprend des moyens (10, 11, 12, 13, 14, 15, 16) pour maintenir les segments (71) dans leur première position, qui sont conçus de telle sorte que chaque segment (71) peut être déplacé dans la direction axiale hors de sa première position lorsqu'une force dirigée axialement, agissant sur le segment (71), survient et dépasse un seuil prédéfini.

2. Aménagement hydroélectrique (1) selon la revendication 1, dans laquelle, dans la deuxième position des segments (71), ceux-ci ne présentent pas de dépassement mais affleurent l'extrémité du premier corps prévue pour être introduite en premier dans la voie d'eau (4) lors de la fermeture de la grille annulaire (5).

3. Aménagement hydroélectrique (1) selon la revendication 1 ou 2, dans laquelle chaque segment (71) comprend des trous oblongs (9) orientés axialement, et la grille annulaire (5) comprend des boulons (10) qui sont guidés dans les trous oblongs (9) et qui sont vissés dans le premier corps (6).

4. Aménagement hydroélectrique (1) selon l'une des revendications 1 à 3, dans laquelle les moyens de maintien des segments (71) dans leur première position comprennent des éléments (10) fournissant des forces de friction adhésive pour maintenir les segments (71).

5. Aménagement hydroélectrique (1) selon l'une des revendications 1 à 4, dans laquelle les moyens de maintien des segments (71) dans leur première position comprennent des éléments élastiques (14, 16).

6. Aménagement hydroélectrique (1) selon l'une des revendications 1 à 5, dans laquelle les moyens de maintien des segments (71) dans leur première position comprennent des éléments de rupture (16).

7. Aménagement hydroélectrique (1) selon l'une quelconque des revendications 1 à 6, dans laquelle la grille annulaire (5) comprend un troisième corps creux (11) entourant l'axe de la roue, qui est disposé de manière concentrique par rapport au premier (6) et au deuxième (7) corps, et la grille annulaire (5) comprend en outre au moins un actionneur (15) qui est disposé entre le premier (6) et le troisième (11) corps de manière à, de manière à pouvoir déplacer le troisième corps (11) dans la direction axiale par rapport au premier corps (6), et dans lequel chaque segment comprend une saillie (13), et le troisième corps (11) comprend une saillie, les saillies (12, 13) étant conçues de manière à pouvoir s'emboîter l'une dans l'autre pour amener les segments (71) dans leur deuxième position lors d'un déploiement de l'actionneur (15), la saillie disparaissant.
